# EUROPÄISCHE PATENTSCHRIFT

(11) **EP 2 637 829 B1**
(45) Veröffentlichungstag und Bekanntmachung des Hinweises auf die Patenterteilung: **19.10.2016**
(21) Anmeldenummer: 11782604.0
(22) Anmeldetag: 10.11.2011
(51) Int. Cl.: B27K 5/00, B27K 3/15, B63B 5/06, C09D 161/28

(54) **SCHIFFE MIT THERMISCH MODIFIZIERTEN UND IMPRÄGNIERTEN HOLZ ODER HOLZWERKSTOFFEN**
SHIPS CONTAINING THERMALLY MODIFIED AND IMPREGNATED WOOD OR WOOD-BASED MATERIAL
NAVIRES COMPRENANT DU BOIS IMPRÉGNÉ ET MODOFIÉ THERMIQUEMENT OUS DES MATÉRIAUX DÉRIVÉS DE TEL BOIS

(30) Priorität: 10.11.2010 DE 102010050788
(43) Veröffentlichungstag der Anmeldung: 18.09.2013
(73) Patentinhaber: Georg-August-Universität Göttingen, 37073 Göttingen (DE); Fr. Lürssen Werft GmbH & Co. KG, 28759 Bremen (DE)
(72) Erfinder: LÜSSEN, Frank, Lemwerder 27809 (DE); MILITZ, Holger, 37120 Bovenden (DE); MAHNERT, Karl-Christian, 37075 Göttingen (DE)
(74) Vertreter: Kröncke, Rolf
(86) Internationale Anmeldenummer: PCT/EP2011/069843
(87) Internationale Veröffentlichungsnummer: WO 2012/062857

(56) Entgegenhaltungen:
- EP-A1- 0 191 196
- WO-A1-2008/155466
- WO-A1-2011/096812
- DE-A1-102005 047 362
- DE-A1-102006 019 820

## Beschreibung

Die vorliegende Anmeldung betrifft ein Schiff mit einem Deck und einem Deckbelag wobei der Deckbelag aus Holzelementen gebildet ist, die aus thermisch modifiziertem und mit Melamin-haltigen Harz zumindest teilweise imprägniertem Holz oder Holzwerkstoffen bestehen. Ein weiterer Aspekt betrifft ein Schiff mit einem Handlauf aus dem genannten Holz oder Holzwerkstoff. Dieses Holz oder dieser Holzwerkstoff ist erhältlich durch ein Verfahren zur Behandlung von Holz und Holzwerkstoffen zur Verbesserung der Dimensionsstabilität und Verbesserung der Flächeneigenschaften sowie zur Vermeidung von Rissbildung und einer Erhöhung der natürlichen Dauerhaftigkeit sowie optischer Veränderung. Genauer eine Behandlung von Holz und Holzwerltstoffen bei dem das Holz oder der Holzwerkstoff einer thermischen Behandlung unterzogen wird und zumindest teilweise mit einem Melamin-haltigen Harz imprägniert wird. Das so imprägnierte Holz oder der so imprägnierte Holzwerkstoff wird unter Heißdampfatmosphäre bei maximal 120°C gehärtet. Schließlich stellt die vorliegende Erfindung die Verwendung von Melamin-haltigen Harz zur Imprägnierung von Holz und Holzwerkstoffen, die thermisch modifiziert werden oder worden sind, zur Erhöhung der Härte und Verringerung der Dimensionsänderung durch thermische Modifizierung, u.a. als Ersatz für Teakholz bereit.

### Stand der Technik

Unter Holzmodifizierung versteht man alle Maßnahmen, die zu einer biozidfreien Verbesserung der Holzeigenschaften führen. Zu den verbesserten Eigenschaften gehören z.B. die Dimensionsstabilität bei Feuchtwechsel und Dauerhaftigkeit gegen holzzerstörende Pilze.

Es existiert bereits eine große Anzahl an Holzvergütungsverfahren, wie beispielsweise Wärmebehandlungsverfahren, Acetylisierung, Furfuryllerung, Kunstharztränkung, Hydrophobierung mit pflanzlichen Ölen und Verkieselung bzw Silylierung.

Folgende Ansätze der Holzmodifizierung werden im Allgemeinen unterschieden: Während der thermischen Holzmodifizierung wird Schnittholz in einer inerten Atmosphäre aus Wasserdampf oder Stickstoff, bei einigen Verfahren auch in Pflanzenöl, auf Temperaturen zwischen 160°C und 280°C erhitzt.

Die Hydrophobierung mit Ölen, Wachsen und Paraffinen basiert auf der Füllung der Zellhohlräume mit den genannten Substanzen durch Imprägnierung des Holzes. Je nach Schmelzpunkt der verwendeten Substanzen ist die Behandlung in einem beheizten Imprägniergefäß durchzuführen.

Für die chemische Modifizierung der Holzzellwand kommen reaktive Chemikalien wie Essigsäureanhydrid (Accoya^{®}-Verfahren) oder Dimethylo-dihydroxyethylen-urea (Belmadur^{®}-Verfahren) zum Einsatz. Diese werden z.T. mit Katalysatoren versetzt, in das Holz imprägniert und anschließend bei Temperaturen um 100°C ausreagiert. Dabei kommt es neben der Vernetzung der Zellwandpolymere (Holzvernetzung) auch zu einer Bindung der Chemikalien an funktionelle Gruppen der Zellwandpolymere.

Für die Polymerisation von Chemikalien in der Zellwand sind zum einen synthetische Harze (z.B. Phenol- und Melaminformaldehydharze) zu nennen. Zum anderen ist als weitere Chemikalie der aus Biomasse gewonnene Furfurylalkohol zu nennen. Dieses Verfahren wird von Firma KEBOY Asa in Norwegen industriell angewendet. Bei der Behandlung von Holz mit Siliziumverbindungen wird auf verschiedene Stoffgruppen zurückgegriffen, u.a. Wassergläser, Silane und Silicone.

Eine thermische Behandlung von Holz wird eingesetzt, um unter anderem Schädlinge abzutöten aber auch eine Veränderung der Holzsubstanz und in der Folge eine Verbesserung der Resistenz gegen holzzerstörende Organismen und andere Umwelteinflüssen zu erreichen. Eine thermische Behandlung des Holzes kann dabei hydrothermisch, in Öl, unter Stickstoffatmosphäre oder entsprechend der in der Beschreibung der Erfindung genannten Verfahren oder Ansätzen der Wärmebehandlung erfolgen. Die Wärmebehandlung soll die Dauerhaftigkeit des Holzes erhöhen, die Hygroskopizität reduzieren und die Dimensionsstabilität des Holzes verbessern.

Die thermische Holzmodifizierung ist seit langem bekannt. Unter anderem wird eine thermische Vergütung von Holz nach Verfahren von Thermowood, Stora-Enso, Stellac Wood, le Bois Rétifié oder Plato durchgeführt. Üblicherweise erfolgt hierbei eine Behandlung des Holzes unter Sauerstoffausschluss für 24 bis 48 Stunden bei einer Temperatur von 180°C bis 230°C. Das so thermisch vergütete Holz zeigt ein geringes Quell- und Schwindverhalten und die Intensität des Masseverlustes durch den Angriff holzabbauende Pilze wird reduziert. Allerdings sind solche thermisch vergüteten Hölzer häufig dadurch gekennzeichnet, dass sie einen charakteristischen Brandgeruch, verminderte mechanische Festigkeiten, vor allem reduzierte Oberflächenhärte und erhöhte Rissbildung, Sprödigkeit sowie eine starke Verfärbung aufweisen.

Vor kurzem wurde von Sernek M., et.al., Holz Roh Werkst., 2008, 66, 173-180 das Verklebungsverhalten von wärmebehandelten Holz untersucht. Dabei wurden hydrothermisch behandeltes und wärmebehandeltes Holz mit verschiedenen Klebstoffen verklebt, um den Einfluss der Wärmebehandlung auf das Klebeverhalten zu untersuchen. Es zeigte sich, dass die Schertestigkeit und die Delaminierung des Brettschichtholzes vom verwendeten Klebstoff abhängig war.

In der WO 02081159 werden Amine zur Holzbehandlung verwendet. Diese werden in geringen Konzentrationen vor der Hitzebehandlung aufgebracht, um Schädlinge im Holz zu bekämpfen. D.h., die dort beschriebenen Amine werden als Biozide eingesetzt und haben keinen Einfluss auf die Festigkeiten des behandelten Materials.

Vor kurzem wurde in der WO 2008/155466 ein Verfahren zur Oberflächenbehandlung von thermisch modifiziertem Holz beschrieben. Hierbei wurde versucht, die Oberflächeneigenschaften des thermisch modifizierten Holzes mit Melaminbehandlung zu verbessern. Hierzu wurde das gemäß dem üblichen Verfahren wärmebehandelte Holz in einem sich anschließendem Schritt mit einem auf Flüssigharz-basierten Schutzmittel beschichtet, getrocknet und ausgehärtet, um eine transparente Schutzoberfläche aus Duroplasten zu erhalten. Unter anderem wird eine Beschichtung des thermisch modifizierten Holzes mit einem Melaminharz beschrieben. Dazu wird dieses Melaminharz auf das thermisch behandelte Holz aufgebracht und bei Temperaturen von 130°C bis 160°C gehärtet, nachdem durch Abdampfen des Wassers das Holz getrocknet wurde. Hierbei werden teilweise auch Katalysatoren zur Verbesserung der Härtung eingesetzt. Allerdings weist das dort beschriebene Verfahren Nachteile, z. B. einen hohen Energiebedarf, auf. Weiterhin werden toxische Substanzen, wie z.B. Methanol und Formaldehyd, aber auch andere flüchtige organische Verbindungen (VOC) aus dem Holz oder Holzwerkstoff freigesetzt. Es besteht weiterhin eine große Entflammungs- und/oder Explosionsgefahr von freigesetzten Gasen während des Verfahrens. Weiterhin wird in dieser Veröffentlichung im Wesentlichen eine Beschichtung vorgesehen, um eine transparente protektive Oberfläche aus Duroplasten zu erhalten. Eine Verbesserung der Eigenschaften über den gesamten Materialquerschnitt hinweg ist folglich nicht zu erreichen.

Aus der EP 1 937 448 ist ein Verfahren zur Behandlung von Holz bekannt, bei dem formaldehydarmes Lignocellulosematerial hergestellt wird. Dieses Verfahren zeichnet sich dadurch aus, dass das Lignocellulosematerial mit einer wässrigen Zusammensetzung mit mindestens einer vernetzbaren Stickstoffverbindung und wenigstens einer die Vernetzung katalysierende Substanz imprägniert wird. Das so imprägnierte Material wird anschließend mit überhitztem Wasserdampf behandelt und wenigstens einer sich daran anschließende Behandlung bei einer Temperatur oberhalb 110° C und einer relativen Feuchte des das Lignocellulosematerial umgebenden gasförmigen Mediums von höchstens 20 %. Dabei wird 1,3-Bis(hydroxymethyl)-4,5-dihydroxyimidazolidinion-2-on (DMDHEU) ggf. versetzt mit Melaminharz eingesetzt. Zur Polymerisierung des DMDHEU werden Katalysatoren zugesetzt, ohne die eine entsprechende Polymerisierung des DMDHEU nicht möglich ist. Die sich anschließende Trockenbehandlung erfolgt bei 130° C. Es wird weiter ausgeführt, dass zur Modifizierung des Holzes auch Effektstoffe, z. B. Farbmittel, hinzugefügt werden können, um gewünschte Eigenschaften des Produktes zu erhalten.

Die DE 10 2005 047 362 A1 beschreibt ein Verfahren zur Herstellung modifizierter Lignocellulosematerialien.

Einige der oben genannten Verfahren wurden bereits eingesetzt, um alternative Holzarten so zu modifizieren, dass diese als Decksbelag eingesetzt werden können. Beispielsweise wird Ahorn durch eine Furfurylierung in vielen Eigenschaften Teak ähnlich, allerdings unterscheidet sich das Produkt optisch eindeutig von Teak. Weiterhin wurden auch Versuche mit thermisch modifizierter Esche durchgeführt, die Teak optisch deutlich ähnlicher ist als das genannte furfurylierte Material. Außerdem besitzt es viele positive technische Eigenschaften (Härte, Abriebfestigkeit, Bewitterungsstabilität), im Bezug auf die natürliche Dauerhaftigkeit ist Teak jedoch überlegen. Alle bisherigen Alternativen zu einem Deck aus Teak weisen gravierende negative Unterschiede auf. Somit werden die Anforderungen an ein Produkt für die Anwendung im angestrebten hochpreisigen Marktsegment nicht erfüllt und eine Nutzung der Alternativmaterialien unterbleibt.

Der Decksbelag eines Schiffes muss unterschiedlichsten Anforderungen technischer und ästhetischer Natur genügen. Bei Passagierschiffen und Yachten sind in den Passagier- bzw. Eigner- und Gästebereichen neben den technischen Eigenschaften die optischen Kriterien besonders wichtig. In den Außenbereichen wird daher bevorzugt Holz eingesetzt. Vielfach verwendete Hölzer z. B.. sind Kambala, Oregon Pine und Teak, wobei Teak als das klassische Material angesehen werden kann, da es u.a. herausragende Eigenschaften hinsichtlich Dimensionsstabilität, natürlicher Dauerhaftigkeit, Rissbeständigkeit, Härte und Witterungsbeständigkeit besitzt. Darüber hinaus ist das Wuchsbild sehr ansprechend; da lange astfreie Planken mit stehenden Jahresringen aus einem Stamm geschnitten werden können.

Teak ist in seinem Naturvorkommen auf die Länder Indien, Indonesien, Thailand und Myanmar (Burma) beschränkt, wobei die drei erstgenannten Staaten ihre Teakvorkommen selbst ausschöpfen und kein Holz in den Export gelangt. Einzig Myanmar exportiert bislang noch Teakholz, das den Anforderungen für die Decksbeläge von Yachten und Schiffen entspricht. Das gegen Myanmar von der EU im Herbst 2007 verhängte Handelsembargo hat die Yacht- und Schiffindustrie jedoch von dieser Ressource abgeschnitten. Aus heutiger Sicht ist die langfristige Versorgung mit Teakholz nicht ausreichend gewährleistet. Um zukünftig Decksbeläge in ausreichender Qualität bereitstellen zu können besteht die Notwendigkeit, einen alternativen Werkstoff zu finden. Teakholz aus Plantagenwirtschaft genügt den Ansprüchen an einen hochwertigen Decksbelag aus technischer und optischer Sicht nicht, da es die Schnellwüchsigkeit zu einer ungünstigen optischen Erscheinung und einer breiten Schwankung mechanischer und anderer Eigenschaften, z. B. natürliche Dauerhaftigkeit, führt.

Um trotz der Verknappung von natürlichem Teak weiterhin hochqualitative Decksbeläge anbieten zu können, sind in der Vergangenheit verschiedene Materialien erprobt und Entwicklungen betrieben worden. Zum einen wurden synthetische Bodenbeläge entwickelt und zum anderen wurden alternative Hölzer Modifizierungsverfahren unterzogen, um die Eigenschaften des verwendeten Holzes positiv zu beeinflussen. Bekannte synthetische Bodenbeläge sind technisch z.T. sehr gute Alternativen zu Teak. In Bereichen mit sehr hohen Ansprüchen an die Ästhetik und Anmutung gestellt werden, können sie jedoch keinen vollwertigen Ersatz zu einem Teakdeck darstellen.

Es besteht daher ein Bedarf Holz und Holzwerkstoffe als Deckbelag und Handlauf für Schiffe bereitzustellen, sowie Verfahren, die eine Verbesserung der physikalischen und chemischen Eigenschaften von thermisch behandeltem Holz, insbesondere eine Verbesserung der Dimensionsstabilität und Festigkeit des Holzes bei verbesserter Oberflächenhärte erlauben. Ein wichtiger Aspekt ist dabei die Vermeidung der Freisetzung toxischer Substanzen, wie Formaldehyd oder anderen VOC (Volatile Organic Compounds) in die Umwelt sowohl während des Herstellungsprozesses oder während der Nutzung des behandelten Holzes oder Holzwerkstoffes. Weiterhin soll das Verfahren die optischen Eigenschaften des Holzes oder des Holzwerkstoffen positiv im Sinne der zukünftigen Nutzung verändern, z.B. denen von Teakholz angleichen.

### Beschreibung der Erfindung

Erfindungsgemäß wird diese Aufgabe durch das Schiff mit einem Deck und einem Deckbelag gemäß Patentanspruch 1 sowie ein Schiff mit einem Handlauf gemäß Anspruch 2 und die Verwendung von behandelten Hölzer und Holzwerkstoffe als Ersatz für Teakholz im Bootsbau bzw. Schiffbau gemäß Patentanspruch 12 erreicht.

Es konnte überraschend gezeigt werden, dass unter Verwendung des beschriebenen Verfahrens eine Verringerung des Energieeinsatzes, eine kontrollierte Freisetzung von toxischen Substanzen sowie eine Verbesserung der Festigkeit und Oberflächenhärte aber auch der optischen Eigenschaften erreicht werden konnte. In einem ersten Aspekt richtet sich die vorliegende Erfindung auf ein Schiff mit einem Deck und einem Deckbelag wobei der Deckbelag aus Halzelementen gebildet ist, die aus thermisch modifiziertem und mit Melamin-haltigen Harz zumindest teilweise imprägniertem Holz oder Holzwerkstoffen bestehen. Ein weiterer Aspekt betrifft ein Schiff mit einem Handlauf aus dem genannten Holz oder Holzwerkstoff. Dieses Holz oder dieser Holzwerkstoff ist erhältlich durch ein Verfahren zur Behandlung von Holz und Holzwerkstoffen, wobei das Holz oder der Holzwerkstoff einer thermischen Modifizierung unterworfen wird, dadurch gekennzeichnet, dass das Holz oder der Holzwerkstoff zumindest teilweise mit einem Melamin-haltigen Harz imprägniert wird und anschließend das so behandelte Holz oder der so behandelte Holzwerkstoff mit Heißdampf bis maximal 120°C, bei Atmosphärendruck gehärtet wird. Bevorzugt findet ein Aushärten bei 80 - 120°C. z.B. 90 - 120°C, insbesondere 110°C-120°C statt Weiter bevorzugt liegt die Temperatur bei unter 120°C. Das so behandelte Holz zeigte verbesserte Festigkeiten und Oberflächenhärten sowie gute Dimensionsstabilität.

Soweit nicht anders ausgeführt, werden durch die Ausdrücke "umfassen", "umfassend", "enthalten" oder "enthaltend" auch die Ausführungsformen von "bestehen" oder "bestehend" erfasst.
Es zeigte sich überraschend, dass der Aushärtungsschritt des Melamin-haltigen Harzes mit Heißdampf bei maximal 120°C eine Verringerung der Energiekosten im Vergleich zu anderen Verfahren der Holzmodifizierung, erlaubt. Gleichzeitig ist es möglich, flüchtige toxische Verbindungen, wie z. B. Formaldehyd durch den Heißdampf zu binden und so eine unkontrollierte Freisetzung zu vermeiden. Das so behandelte Holz zeigte verbesserte Festigkeiten und Oberflächenhärten sowie gute Dimensionsstabilität und Bewitterungsresistenz, sowie eine gesteigerte, natürliche Dauerhaftigkeit.

Der Ausdruck "thermische Modifikation" von Holz beschreibt ein Verfahren der Holzmodifizierung, bei dem Holz in Abhängigkeit von den verschiedenen Verfahren bevorzugt unter weitgehendem Ausschluss von Sauerstoff auf Temperaturen zwischen 150°C und 280°C erhitzt wird und das Holz. unter Temperatureinwirkung so verändert wird, dass wesentliche Eigenschaften, z.B. Dimensionsstabilität und Farbe verändert werden. Aus den dabei eintretenden chemischen und physikalischen Prozessen ergeben sich folgende Veränderungen:
- Reduzierte Wasseraufnahme
- Reduzierte Ausgleichsfeuchte
- Erhöhte Dauerhaftigkeit gegenüber holzzerstörenden Organismen
- Verbesserte Dimensionsstabilität
- Rückgang der Dichte
- Verringerung der dichtekorrelierten Festigkeiten
- optische Veränderung, insbesondere Dunkeln

Der weitgehende oder vollständige Sauerstoffausschluss während der thermische Behandlung von Holz wird in Abhängigkeit von dem Verfahren durch Behandlung des Holzes in Wasser oder Wasserdampf (hydrothermische Modifizierung), Stickstoffatmosphäre oder durch Anwesenheit anderer inerter Gase oder Substanzen erreicht.

Gemäß dem hier beschriebenen Verfahren zur Herstellung des Deckbelags oder des Handlaufs von Schiffen wird in einer bevorzugten Ausführungsform das Holzmaterial in einem Schritt in untypischer Weise einer Wärmebehandlung unterzogen, um in erster Linie das Aussehen und die Dimensionsstabilität des Holzes zu verändern und positiv zu beeinflussen, während im Stand der Technik eine Wärmebehandlung in erster Linie zur Beeinflussung technischer, z.B. mechanischer Eigenschaften eines Werkstückes eingesetzt wird. Die Wärmebehandlung erfolgt vorzugsweise unter Sauerstoffauschluß. Die Wärmebehandlung führt bei dem Holz zu einer veränderten Farbe, insbesondere zu einem Dunkeln des Holzes. Die Wärmebehandlung wird zum Zwecke einer idealen Farbgebung durchgeführt, die das Holz vollständig und gleichmäßig nachdunkeln lässt, so dass z. B. ein teakähnliches Erscheinungsbild des Holzes erreicht wird. Eine vollständiges Durchfärben ist besonders bevorzugt, da insbesondere der Decksbelag eines Schiffes im Laufe der Zeit mehrfach abgeschliffen wird und eine unregelmäßige oder partielle Färbung eine unansehnlichen Fleckenbildung nach sich zieht. Darüber hinaus wird die Mikroporosität des Holzes derart geändert, dass eine höhere Aufnahme des Melamin-haltigen Harzes während der Imprägnierung ermöglicht wird.

Für den Begriff "thermische Modifizierung" werden, ohne Anspruch der Liste auf Vollständigkeit, folgende Synonyme verwendet: thermische Vergütung, Hitzebehandlung, Hitzemodifizierung, thermische Modifizierung, thermischphysikalischen Modifizierung, thermische Veredelung und Wärmebehandlung. Bekannte Verfahren sind von den Unternehmen: Stellac, Bois Rétifié, Stellac, WTT, Plato, OHT, OpelTherm, BICOS, FirmoLin, NewOptionWood beschrieben.

Unter dem Ausdruck "Heißdampf" wird vorliegend eine Sättigung der Atmosphäre der Reaktionsumgebung mit Wasserdampf verstanden. Die Temperatur des Wasserdampfes ist insbesondere maximal 120°C, wie kleiner 120°C und beträgt bevorzugt 100 -120°C.

Unter dem Ausdruck "Holz" wird vorliegend das aus verschiedenen Zellen zusammengesetzte Dauergewebe von Nadel- und Laubhölzern verstanden. Das als Rundholz geerntete Material wird z.B. zu Schnittholz (Bohlen oder Bretter) weiter verarbeitet, das dann erfindungsgemäß eingesetzt werden kann.

Unter dem Ausdruck "Holzwerkstoff" wird vorliegend ein Verbundwerkstoff aus Holzpartikeln, wie Spänen, Fasern oder Strands, verstanden. Insbesondere sind Holzwerkstoffe solche einschließlich Schickt-. Sperr- und Leimhölzer, Holzspan- und Holzfaserplatten.

Unter dem Ausdruck "Melamin-haltige Harze" werden solche Harze verstanden, die als eine Komponente Melamin (2,4,6-Triamino-Triazin) aufweisen. Insbesondere handelt es sich hierbei um MF-Harze (Melamin-Formaldehyd-Harze). Sie werden durch die Polykondensation von Melamin mit Formaldehyd gewonnen. Andere Melamin-haltige Harze einschließlich Melaminharzen schließen ein: Melamin-Formaldehyd-Harze (MF-Harze), Melamin-Harnstoff-Formaldehyd-Harz (MUF), Melamin-Harnstoff-Phenol-Formaldehyd-Harze (MUPF) oder Methanol-verethertes Melamin-Formaldehyd-Harz, Methanol-verethertes MUF oder Methanol-verethertes MUPF.

Das ausgehärtete Harz ist ein farbloser, chemikalien- und temperaturbeständiger duroplastischer Kunststoff.

Es zeigte sich, dass bei Einsatz von Heißdampf die flüchtigen toxischen Bestandteile in diesem Heißdampf verbleiben und in einem nachgeschalteten Prozessschritt von dem Heißdampf getrennt werden, so dass keine unkontrollierte Freisetzung gegebenenfalls teilweise toxischer flüchtiger Bestandteile wie Formaldehyd oder Methanol in die Umwelt erfolgt.

Das Heißdampfverfahren wird z.B. in einem Autoklaven durchgeführt. Dieses Behältnis wird, ähnlich wie bei Esteves et al (2007) Wood Science and Technology 41(3), 200193-207, während des Prozesses über eine Leitung von außen mit dem Heißdampf gefüllt. Die Durchführung des Prozesses kann z. B. in einem Hochtemperaturholztrockner erfolgen. Dem Fachmann sind geeignete Verfahren und Vorrichtungen hierfür bekannt.

Durch die beschriebene Aushärtung des Melamin-haltigen Harzes in der Gewebestruktur des Holzes bildet sich ein hochmolekulares dreidimensionales Gerüst, welches die Holzstruktur aussteift und somit zu einer Erhöhung der mechanischen Belastbarkeit, insbesondere der Härte, führt. Gleichzeitig werden die Angriffspunkte für holzzerstörende Mikroorganismen wie Pilze physisch blockiert, es wird somit eine erhöhte Dauerhaftigkeit gegen biologischen Abbau erzielt.

Durch die Kombination der beiden oben genannten Modifikationen wird z.B. zudem ein dem Teakholz entsprechendes Maß an Bewitterungsstabilität gewährleistet. Dabei ist insbesondere vorteilhaft, dass bei einem Wärmebehandlungsverfahren das Holz im gesamten Volumen durchgefärbt wird. Folglich sind Bearbeitungsschritte wie Schleifen Sägen etc. ohne optische Einbußen möglich. Nachteilig wirkt sich allerdings eine Reduktion der Festigkeitseigenschaften in Folge der thermischen Behandlung aus. Diese Reduktion der Festigkeitseigenschaften wird in dem weiteren Verfahrensschritt mittels Imprägnierung mit Melamin-haltigem Harz ausgeglichen. Vorteilhafterweise wird dabei das gesamte Holz durchtränkt. Vorzugsweise wird das Imprägniermittel in einer wässrigen Lösung mit einer Konzentration in einem Bereich von 5%, 10%, 15%, 20%, 25%, 30%, 35%, 40% verwendet. Besonders bevorzugt wird für die Imprägnierung Melaminharz eingesetzt. Melaminharz umfasst hier insbesondere Melamin, Melaminformaldehydharz, Melamin-Formaldehyd-harzhaltige Stammlösung und ähnliches. Auch andere polymerisierbare Chemikalien, können erfindungsgemäß eingesetzt werden. Nachdem der Holzwerkstoff mit dem Melamin-haltigen Harz imprägniert wurde, findet eine Aushärtung hiervon statt. Bei der Aushärtung polymerisiert das Melamin-haltige Harz und bildet eine feste Struktur. Hierdurch wird eine wesentlich erhöhte Dauerhaftigkeit des Holzes erreicht Auch die Härte des Holzes nimmt zu. Besonders vorteilhaft ist die Farblosigkeit des Melaminharzes, sodass die mittels der Wärmebehandlung eingestellte Färbung des Holzwerkstoffes beibehalten bleibt.

In einer bevorzugten Weiterbildung des vorliegenden Verfahrens umfasst die Wärmebehandlung mindestens den Schritt einer Vakuumhochtemperaturbehandlung. Ein solcher Schritt der Wärmebehandlung ist bevorzugt, da in einer Wärmebehandlungskammer kein anderes inertes Medium eingeleitet werden muss Der Ofen oder Autoklav wird evakuiert, aus dem Holz austretende Gase können abgesaugt werden.

Gemäß einer weiteren bevorzugten Ausführungsform des vorliegenden Verfahrens erfolgt die Imprägnierung im Vakuum-Druck-Verfahren. Gemäß einer weiteren bevorzugten Ausführungsform des Verfahrens umfasst die Vakuum-Druck-Imprägnierung eine Vorvakuumphase. In der Vakuumphase wird sich im Holz befindliches Gas entfernt, sodass die Imprägnierbarkeit des Holzwerkstoffes zunimmt. So kann eine höhere Beladung des Holzwerkstoffen mit Behandlungsmittel erreicht werden, wodurch die mechanischen Eigenschaften des behandelten Holzes weiter positiv beeinflusst werden.

Gemäß einer weiteren bevorzugten Ausführungsform des Verfahrens umfasst die Vakuum-Druck-Imprägnierung eine Hochdruckphase. Bei einer solchen Hochdruckphase werden das Holz oder der Holzwerkstoff und das Behandlungsmittel mit hohem Druck, beispielsweise 8 bis 14 bar, beaufschlagt. In Abhängigkeit von der zeitlichen Dauer der Druckbeaufschlagung werden so eine hohe Beladung des Holzwerkstoffes und eine gleichmäßige und vollständige Durchtränkung erreicht. Hierdurch werden die besten Voraussetzungen für eine gleichmäßige Verbesserung der mechanischen Eigenschaften des Holzwerkstoffes geschaffen

Während der Vakuum-Druck-Imprägnierung erfolgt die Füllung der Zellhohlräume mit der Imprägnierlösung.

Gemäß einer weiteren bevorzugten Ausführungsform des Verfahrens erfolgt die Aushärtung des Melaminharzes im Rahmen einer Heißdampftrocknung. Durch eine Beaufschlagung des Holzwerkstoffes mit einer speziellen Heißdampfatmosphäre während des Trocknungsprozesses ist es möglich, den Feuchtegrad des Holzwerkstoffes zu regulieren. Da zu Beginn des Trocknungsprozesses das Melamin-haltige Harz im Wesentlichen in einem flüssigen Zustand innerhalb des Holzwerkstoffes vorliegt, erfolgt während der hitzekatalysierten Aushärtung (Curing) die Freisetzung leicht-flüchtiger Bestandteile. Gemäß einer weiteren bevorzugten Ausführungsform des Verfahrens umfasst der Schritt der Aushärtung einen Schritt der Polykondensation des Melamin-haltigen Harzes, insbesondere des Melaminharzes.

Gemäß einer weiteren bevorzugten Ausführungsform des Verfahrens weist dieses einen Schritt der Feuchtekonditionierung des Holzwerkstoffes auf. Die Feuchtekonditionierung ist vorzugsweise im Anschluss an eine Aushärtung des Melamin-haltigen Harzes vorzunehmen. Mittels einer Feuchtekonditionierung können die mechanischen Eigenschaften des Holzwerkstoffes weiter positiv beeinflusst werden.

In einer weiteren bevorzugten Ausführungsform schließt sich dem Aushärten des Melamin-haltigen Harzes mit Heißdampf bei maximal 120°C, insbesondere kleiner 120°C, die thermische Modifizierung des Holzes oder des Holzwerkstofffes an. Diese Behandlung des Holzes oder Holzwerkstoffes erfolgt dabei unmittelbar anschließend ohne vorherige Abkühlung des Holzes oder Holzwerkstoffes auf unter 50°C, wie nicht unter 80°C. Bevorzugt wird das Holz bzw. der Holzwerkstoff nach der Heißdampfbehandlung bei maximal 120°C nicht wieder abgekühlt. Vielmehr schließt sich die thermische Behandlung des Holzes unmittelbar an, z.B. in Form einer thermischen Vergütung bei 150-280°C in einem der bekannten Verfahren. An dieser Stelle seien exemplarisch zwei der etablierten Verfahren genannte: das hydrothermische Plato-Verfahren, bei dem eine Behandlung unter Wasserdampfatmosphäre erfolgt. Die Temperatur ist dabei auf 180°C bis 240°C eingestellt, die Zeitdauer liegt bei 24 bis 48 Stunden, kann aber auch verkürzt sein auf 4 bis 24 Stunden, wie 6 Stunden. In einem als Retifikation bezeichneten Verfahren wird das Holz unter Stickstoffatmosphäre für 0,5 bis 4 Stunden bei Temperaturen von 160°C bis 250°C behandelt.

In einer weiteren bevorzugten Ausführungsform ist das Verfahren zur Behandlung von Holz und Holzwerkstoffen eines, wobei das Holz vor Behandlung mit dem Melamin-haltigen Harz bei Temperaturen von 150°C bis 280°C, wie 160°C - 260°C, insbesondere bevorzugt von 80°C bis 240°C, thermisch modifiziert wurde. Dieses thermisch behandelte Holz wird mit Melamin-haltigem Harz imprägniert und anschließend unter Heißdampfbedingungen bei maximal 120°C, wie unter 120°C, ausgehärtet.

Das vorliegende Verfahren erfolgt dabei bevorzugt derartig, dass das Holz oder der Holzwerkstoff vollständig mit dem Melamin-haltigen Harz imprägniert wird. D.h., die Imprägnierung mit dem Melamin-haltigen Harz erfolgt bevorzugt derartig, dass ein vollständiges Durchtränken des Holzes oder des Holzwerkstoffes erfolgt. Der Imprägrtierungsschritt wird entsprechend ausreichend lange bemessen, um ein vollständiges Imprägnieren des Holzes oder des Holzwerkstoffes zu erreichen. Die Imprägnierung des Holzes oder des Holzwerkstoffes erfolgt dabei gemäß bekannten Verfahren, wie z.B. einem Vakuum-Druck-Verfahren.

In einer weiteren bevorzugten Ausführungsform ist die Lösung mit Melamin-haltigem Harz zum Imprägnieren des Holzes oder des Holzwerkstoffen eine, die zumindest keine Katalysatoren, farbgebende oder brandschutzrelevant Substanzen als Zusatzstoffe enthält. In Anpassung an den Anwendungszweck oder Einsatzbereich des Produktes ist jedoch der Zusatz von plastifizierenden und/ oder hydrophobierenden Additiven möglich und gegebenenfalls bevorzugt.

Das vorliegende Verfahren eignet sich für alle tränkbaren Holzarten wie Kiefer, Weymouth-Kiefer, Erle, Birke, Ahorn, Buche, Hainbuche, Weide, Pappel, Hevea- und Bombax-Arten, Kastanie Ceiba, Ramin, Sesendock, Ilomba, Kondroti, Eukalyptus, Limba, Koto oder Holzwerkstoffen aus diesen Materialien, insbesondere Limba (Terminalia superba) oder Koto (Pterygota ssp.).

Es ist möglich, die Eigenschaften von geringwertigem Holz, insbesondere auch einheimischem Weichholz, durch das vorliegende Verfahren zu verbessern. Somit wird ein Einsatz im Außenbereich, z.B. für Terrassen oder im Baugewerbe, aber auch im Bonden- oder Feuchtbereich, wo er-höhte Anforderungen an Härte und Dimensionsstabilität gefordert sind, ermöglicht. Das vorliegende Verfahren, nämlich eine gleichzeitige thermische Behandlung des Holzes mit einer Imprägnierung mit Melaminharz und unmittelbar anschließender Aushärtung unter Heißdampfatmosphäre sowie eine Behandlung von thermisch modifiziertem Holz mit Melamin-haltigen Harz und Aushärtung mit Heißdampf, erlaubt es, die Festigkeitsverluste an Holz als Folge der thermischen Modifizierung zu mindern.

Das voliegende Verfahren eignet sich besonders auch für nichttropische Holz arten wie Kiefer, Weyrnouth-Kiefer, Erle, Birke, Ahorn, Buche, Hainbuche, Weide, Pappel, Kastanie oder Holzwerkstoffen aus diesen Materialien.

Das vorliegende Verfahren eignet sich also für alle Hart- und insbesondere auch Weichholzarten, soweit diese imprägnierbar sind.

Diese so behandelten Hölzer und Holzwerkstoffe sind insbesondere in folgenden Bereichen einsetzbar: im Außen- und Erdverbau, im Garten- und Landschaftsbau, in Spund- und Lärmschutzwänden, als Bahnschwellen, zum Bau von Brücken und Stegen sowie sonstigen Hafenbereichen. Geeignete Anwendungsgebiete sind weiterhin Terrassendielen in Bereichen mit Erdkontakt, Fassadenbestandteile, Fenster und Türen sowie Spielplatzeinrichtungen. Das erfindungsgemäß modifizierte Holz kann als Material zum Bootsbau und als witterungsbeständiger Decksbelag verwendet werden. Für die Herstellung von Möbeln für den Innen- und Außenbereich ist es geeignet. Ein weiteres Anwendungsgebiet stellen Verpackungsmaterialien dar.

Durch die Behandlung mit Melamin-haltigem Harz können höherwertige Holz- und Holzwerkstoffprodukte bereitgestellt werden. Insbesondere können Hölzer und Holzwerkstoffe bereitgestellt werden, die eine verbesserte Oberflächenhärte, Festigkeit und Dimensionsstabilität aufweisen im Vergleich zu thermisch behandelten Holz, das nicht mit Melamin erfindungsgemäß imprägniert und anschließend mit Heißdampf ausgehärtet wurde.

Durch vollständiges Imprägnieren des Holzes oder des Holzwerkstoffes kann das Schwindverhalten der so behandelten thermisch modifizierten Hölzer und Holzwerkstoffe verbessert werden. Außerdem erlauben die erfindungsgemäßen Verfahren die optischen Eigenschaften des Holzes oder des Holzwerkstoffes applikationsspezifisch zu verbessern und z.B. einen Ersatz für Teakholz zu liefern.

Entsprechend richtet sich in einem weiteren Aspekt die vorliegende Erfindung auf ein Schiff mit einem Deck und einem Deckbelag, wobei der Deckbelag aus thermisch behandeltem und mit Melaminharz imprägniertem und gehärtetem Holz oder Holzwerkstoffe erhältlich gemäß einem der beschriebenen Verfahren besteht. Diese thermisch behandelten und mit Melaminharz imprägnierten und gehärteten Hölzer zeichnen sich durch verbesserte Oberflächenhärte und erhöhter Festigkeit aus. Gleichzeitig zeigen sie eine Verbesserung in der Dimensionsstabilität und eine verringertes Quellen bzw. Schwindverhalten im Vergleich zu thermisch behandeltem Holz, das nicht mit Melaminharz erfindungsgemäß behandelt wurde.

Insbesondere bei den Holzarten Limba oder Koto kommt ein Verfahren mit den oben genannten Merkmalen zu bevorzugten Ergebnissen. Diese Holzarten eignen sich sowohl aufgrund der Struktur und Tränkbarkeit als auch der gesicherten Verfügbarkeit Nach Anwendung des vorliegenden Verfahrens sind sowohl das Erscheinungsbild als auch die technischen Eigenschaften ähnlich den von Teakholz und erlauben die Substitution von Teakholz.

Gemäß einem Aspekt der Erfindung wird die Aufgabe bei einem Schiff der eingangs genannten Art dadurch gelöst, dass der Decksbelag aus Holzelementen mit Merkmalen des oben genannten Holzelements gebildet ist. Ein solches erfindungsgemäßes Holzelement verfügt über Eigenschaften, die Teakholz ähnlich sind. Auf Deck eines Schiffes ist das Holz starken Beanspruchungen, wie Witterung, Salzwasser, Fußtritten, Reinigungsmitteln und ähnlichem ausgesetzt. Holzelemente mit den oben genannten Eigenschaften sind mittels eines Verfahrens mit den oben genannten Merkmalen behandelt, sodass die technischen Eigenschaften denen von Teakholz ähneln. Das erfindungsgemäße Holzelement hält den genannten Beanspruchungen stand und eignet sich erfindungsgemäß als Decksbeleg bei Schiffen und/oder Yachten. Das modifizierte Holz kann auch für weitere Anwendungen auf Schiff und Yachten eingesetzt werden. Ein weiteres bevorzugtes Anwendungsfeld sind Handläufe.

Gemäß einem weiteren Aspekt der Erfindung wird die Aufgabe bei Verwendung von behandeltem Holz als Ersatz für Teakholz dadurch gelöst, dass das Holz nach einem Verfahren mit den oben genannten Merkmalen eines erfindungsgemäßen Verfahrens behandelt ist. Aufgrund der optischen sowie technischen Eigenschaften eignet sich dieses behandelte Holz besonders als Teakholzersatz. Insbesondere ist bevorzugt, als Ausgangsmaterial Limba oder Koto zu nutzen. Das Holz oder der Holzwerkstoff kann dabei aus einem der oben genannten Holzarten bestehen.

D.h., ein Aspekt der vorliegenden Erfindung wird erreicht durch ein Verfahren, bei dem Holz oder Holzwerkstoffe mit einer wässrigen Lösung aus Melaminhaltigen Harz, wie Melamin-Formaldehyden-Harz, bevorzugt ohne Katalysator, farbgebende oder brandschutzrelevante Substanzen, imprägniert, insbesondere vollständig imprägniert werden und die Aushärtung des Harzes im Heißdampf bei maximal 120°C, insbesondere kleiner 120°C in einem Prozess kombiniert mit der thermischen Modifizierung erfolgt. Dabei schließt sich an die Härtungsphase des Melamin-haltigen Harzes bei bis zu 120°C, wie unter 120°C, im Heißdampf eine thermische Modifizierung des Holzes mit Temperaturen von 150°C bis 280°C, wie 160°C - 260°C, insbesondere bevorzugt 180°C bis 240°C, an.

Bevorzugt erfolgt das vorliegende Verfahren mit Imprägnierung mit Melaminhaltigem Harz, dem Aushärten dieses Melamin-haltigen Harzes und der anschließenden thermischen Modifizierung des Holzes bzw. Holzwerkstoffes in einem kontinuierlichen Prozess, in einer entsprechend geeigneten Einrichtung.

Ein weiterer Aspekt der vorliegenden Erfindung wird erreicht durch ein Verfahren für die Behandlung von thermisch modifiziertem Holz, wobei dieses thermisch modifizierte Holz durch eine wässrige Lösung eines Melamin-haltigen Harzes imprägniert wird. Die Imprägnierlösung enthält dabei bevorzugt keinen Katalysator, keine farbgebenden oder brandschutzrelevanten Substanzen. Nach Imprägnierung des thermisch modifizierten Holzes erfolgt eine Aushärtung des Harzes unter Heißdampfbedingungen bei maximal 120°C.

Die Erfindung ist nachstehend anhand von Ausführungsbeispielen unter Bezugnahme auf die Zeichnungen näher beschrieben. Es zeigen:

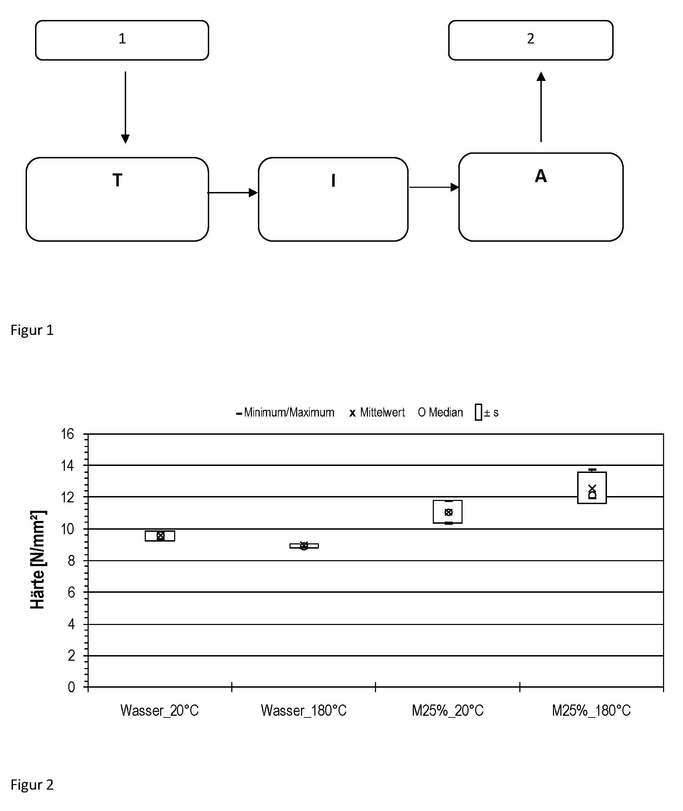

Figur 1: Das Prozessschaubild einer Ausführungsform eines vorliegenden Verfahrens.

Der in Figur 1 gezeigte schematische Ablauf einer Ausführungsform des hierin beschriebenen Verfahrens weist fünf Schritte auf, wobei nur drei Schritte auf das eigentliche Verfahren entfallen. Zunächst wird in einem ersten Schritt 1 das zu behandelnde Holz selektiert Hierbei sind je nach Anforderung optische Fehler und strukturelle Holzmerkmale wie Faserverlauf, Äste, Reaktionsholz etc., zu beachten. Bei der Behandlung von Holz sollte ausschließlich Holz gleicher Abmessung und Tränkbarkeit unter Beachtung der oben genannten Kriterien zu einer Charge zusammengestellt werden.

Bei der Wärmebehandlung wird das Holz abhängig von der zu erzielenden Färbung und der Holzsorte bei einer Temperatur z. B. zwischen ca. 160 und 220°C thermisch behandelt. Vorzugsweise geschieht dieser Schritt unter Ausschluss von Sauerstoff, ferner bevorzugt in einer Vakuumatmosphäre;

Nach einer zwischengeschalteten Abkühlphase des Holzmaterials (nicht gezeigt) schließt sich an die Wärmebehandlung T gemäß diesem Ausführungsbeispiel die Imprägnierung I, vorzugsweise mit Melaminharz, an. Diese umfasst eine Vakuum-Druck-Imprägnierung mit wässriger Harzlösung in einer marktüblichen Vakuum-Druck-Imprägnieranlage. Nach Beendigung der Vakuumphase erfolgt die Druckimprägnierung vorzugsweise bei Drücken zwischen 8 und 14 bar, wobei die zeitliche Gestaltung des Druckverlaufs sowie die gesamte zeitliche Dauer abhängig ist von den Dimensionen der Holzstücke sowie von der verwendeten Holzart. Während dieser Imprägnierung werden die Zellräume im Holz mit der Imprägnierlösung gefüllt.

An den Schritt der Harzimprägnierung I schließt sich der Schritt der Aushärtung A (Curing) an. Hierbei wird mittels Wärmezufuhr die wärmekatalytische Polykondensationsreaktion des Harzes ausgelöst. Das Kunstharz kondensiert zu langkettigen Polymeren und bildet so eine dreidimensionales Netz. Zusätzlich reagiert das Melamin dabei chemisch mit den Zellwänden, wodurch die Dauerhaftigkeit sowie die technischen Eigenschaften weiter positiv beeinflusst werden. Die bei der Polykondensation frei werdenden Nebenprodukte werden durch den Heißdampf der Heißdampfatmosphäre entfernt. Zusätzlich kann durch die Heißdampfatmosphäre auch eine Feuchtekonditionierung des Werkstoffes vorgenommen werden. Die zeitliche Dauer des Aüshärtungsschritts ist wiederum abhängig von der Melaminbeladung, dem Werkstoff sowie den Geometrien und Dimensionen der Werkstoffe.

Nach der Entnahme aus dem Reaktionskessel liegt ein fertiger Werkstoff 2 vor. Dieser Werkstoff kann nun im Allgemeinen wie ein herkömmlicher Holzwerkstoff bearbeitet werden. Die optischen und mechanischen Eigenschaften eines solchen Werkstoffs gleichen bei geeigneter Behandlungsintensität und Prozessführung im Wesentlichen denen von Teakholz. Das so behandelte Holz lässt sich als Decksbelag und Handläufe bei Schiffen und Yachten oder allgemein als Teakholzersatz einsetzen.

Im Folgenden wird die Erfindung mit Hilfe von Beispielen erläutert, ohne dass sie auf diese beschränkt ist.

### Beispiel 1

### Oberflächenhärte

Für die Kombinationsbehandlung aus MF-Harz-Modifizierung und thermischer Modifizierung von Holz in einem Verfahrensschritt wurde Splintholz der Kiefer (*Pinus sylvestris*) als Ausgangsmaterial verwendet.

Die Zusammensetzung der Melaminlösungen bestand aus 25% Madurit MW 840/75WA (INEOS MELAMINES GmbH) mit einem Feststoffgehalt von 75%. Die Lösung wurde weiterhin mit 0,2% bis 5% Triethanol stabilisiert und der pH-Wert mit NaOH 5%ig auf 8 bis 12, bevorzugt 9 bis 11, eingestellt.

18 Prüfkörper (25 x 25 x 25 mm³) wurden mit der 25%igen MF-Harz-Lösung imprägniert. Für Referenzuntersuchungen wurden 18 Prüfkörper mit Wasser imprägniert.

Die Imprägnierung des Holzes erfolgte in einem Vakuum-Druck-Verfahren wie es in der Holzindustrie eingesetzt wird. Die folgenden Angaben zu den gewählten Behandlungsdrücken beziehen sich jeweils auf einen Normaldruck von 1,013 bar. Das Vorvakuum betrug 0,1 bis 0,9 bar über 0,1 bis 4 Stunden, bevorzugt 0,5 bis 1,5 Stunden. Die Druck-Imprägnierung erfolgte bei 10 bis 14 bar, bevorzugt 12 bis 13 bar über 1,5 bis 13 Stunden, bevorzugt 2 bis 8 Stunden. Das Nachvakuum bei 0 bis 0,5 bar wurde über eine Dauer von 0,2 bis 5 Stunden, bevorzugt über 0,3 bis 1 Stunde angelegt.

Die Aushärtung der imprägnierten Prüfkörper erfolgte im Heißdampf über eine Dauer von jeweils 6 Stunden in einem Laborautoklaven bzw. bei Zimmertemperatur (20°C). Dabei erfolgte in einem ersten Schritt die Aushärtung des Melaminharzes unter Heißdampfatmosphäre bei 120°C, die thermische Modifizierung des Holzes, die sich unmittelbar anschließt, erfolgte bei 180°C und fand in einer zweiten Phase des Prozesses statt. Im Falle der Vergleichsprobe erfolgte keine thermische Behandlung.

Nach der anschließenden Klimatisierung der Prüfkörper bei 20°C und 65% relativer Luftfeuchte erfolgte die Ermittlung der Oberflächenhärte gemäß DIN EN 1534 (2010) an sechs Prüfkörpern je Variante (Figur 2).

Die Abnahme der Materialhärte durch die thermische Modifizierung des Holzes ohne anschließende MF-Harz-Modifizierung wird ebenso sichtbar wie der deutliche Anstieg der Härte durch die zusätzliche MF-Harz-Behandlung.

### Bruchlast

Aus Splintholz der Kiefer wurden Prüfkörper (10 x 10 x 180 mm³) für die Ermittlung der Maximalkraft des Holzes bei Bruch hergestellt. Diese Prüfkörper wurden mit einer Melaminlösung imprägniert, die aus 30% Madurit MW 840/75WA (INEOS MELAMINES GmbH) mit einem Feststoffgehalt von 75% bestand. Die Lösung wurde weiterhin mit 0.2% bis 5% Triethanol stabilisiert und der pH-Wert mit NaOH 5%ig auf 8 bis 12, bevorzugt 9 bis 11, eingestellt.

Die Imprägnierung des Holzes erfolgte in einem Vakuum-Druck-Verfahren wie es im Abschnitt Oberflächenhärte dokumentiert wurde.
Die kombinierte Aushärtung des Melaminharzes und die thermische Modifizierung erfolgte in einem mehrstufigen Prozess bei einer Maximaltemperatur von 180 °C, der die Prüfkörper über eine Dauer von 3 Stunden ausgesetzt waren. Das hergestellte Material wird im Folgenden als mtK (Melamin-Thermo-Kiefer) bezeichnet.

Die mittlere prozentuale Massezunahme der Prüfkörper durch die Kombinationsbehandlung betrug 34 %.

Als Referenzmaterial wurden Prüfkörper aus gleichem Material ohne Imprägnierbehandlung über eine Dauer von 3 Stunden bei 180 °C thermisch modifiziert. Dieses Material wird mit tK (Thermo Kiefer) bezeichnet.

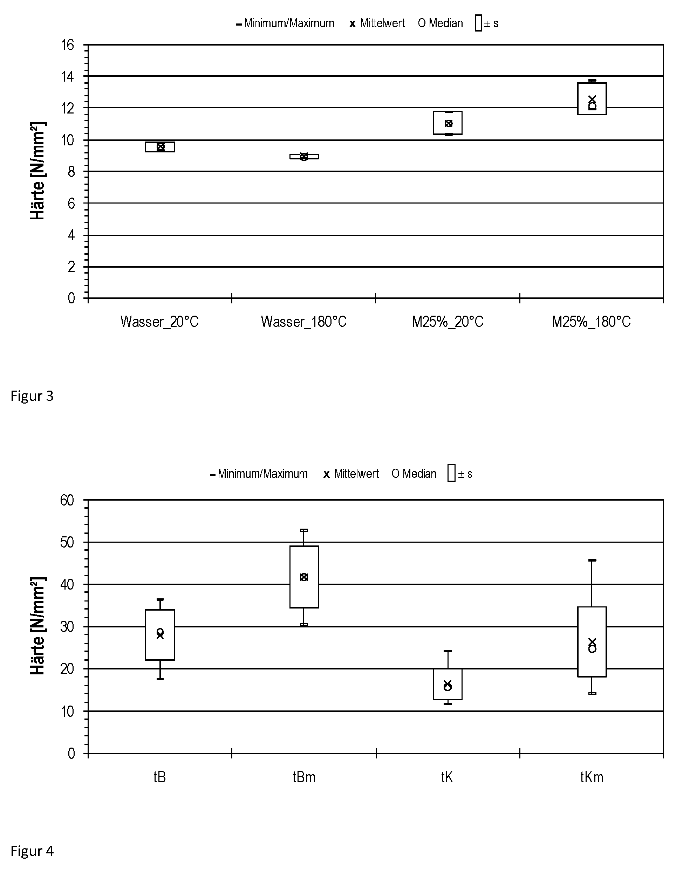

Die Untersuchung der Prüfkörper zeigt überraschender Weise eine deutliche Zunahme der Kraft bei Bruch für die Proben, die vor der thermischen Behandlung mit Melaminharz behandelt worden waren (Figur 3).

### Beispiel 2

Ausgangsmaterial für die Behandlung ist thermisch modifizierte Buche (tB) und thermisch modifizierte Kiefer (tK) aus einem kommerziellen Verfahren. Die Behandlungstemperatur betrug jeweils 210°C. Die Proben hatten die Dimensionen 160 x 25 x 1400 mm³, wobei die Hirnflächen mit PYROTECT (RÜTGERS Organics GmbH) versiegelt wurden. Aus den modifizierten Brettern wurden die Proben für die folgenden Untersuchungen hergestellt.

Als MF-Harz wurde Madurit MW 840/75WA (INEOS MELAMINES GmbH) mit einem Feststoffgehalt von 75% verwendet. Der Anteil von Madurit an der wässrigen Imprägnierlösung betrug 25%, zugesetzt wurde des Weiteren 0,2 bis 5 % Triethanol zur Stabilisierung der Imprägnierlösung sowie NaOH 5%ig um den pH-Wert der Lösung auf den Bereich 8 bis 12, bevorzugt 9 bis 11, einzustellen.

Die Imprägnierung des Holzes erfolgte im Vakuum-Druck-Verfahren. Die folgenden Angaben zu den gewählten Behandlungsdrücken sind jeweils mit Bezug zu einem Normaldruck von 1,013 bar zu verstehen. Das Vorvakuum betrug 0,1 bis 0,9 bar über 0,1 bis 4 Stunden, bevorzugt 0,5 bis 1,5 Stunden. Die Druck-Imprägnierung erfolgte bei 10 bis 14 bar, bevorzugt 12 bis 13 bar über 1,5 bis 13 Stunden, bevorzugt 2 bis 8 Stunden. Das Nachvakuum bei 0 bis 0,5 bar wurde über eine Dauer von 0,2 bis 5 Stunden, bevorzugt über 0,3 bis 1 Stunden angelegt.

Das Aushärten des Holzes erfolgte im Heißdampf bei 120°C. Die modifizierten Holzarten werden im Folgenden als tBm (thermisch modifizierte Buche + Melamin-Harz) und tKm (thermisch modifizierte Kiefer + Melamin-Harz) bezeichnet Die Massezunahme der Prüfkörper durch die Modifizierung mit MF-Harz mit wurde über die Differenz der Darrmasse von Prüfkörpern vor und nach der Modifizierung ermittelt. Sie betrug im Mittel 23 % für tBm und 20 % für tKm.

Anschließend wurden aus den Brettern Prüfkörper (50 x 50 x 20 mm³) hergestellt und diese bei Normklima (nach DIN 50 014 (1985) 20°C und 65 % relative Luftfeuchte) bis zur Gewichtskonstanz konditioniert.

Die Oberflächenhärte des Materials wurde senkrecht zum Faserverlauf nach DIN EN 1534 (2010) an 10 Prüfkörpern pro Material geprüft.

Die Erhöhung der Brinellhärte durch sekundäre Melaminbehandlung thermisch modifizierten Holzes ist deutlich erkennbar (Figur 4).

### Natürliche Dauerhaftigkeit

Die natürliche Dauerhaftigkeit der Materialien tBm und tKm gegen holzzerstörende Basidiomyceten im Vergleich zu den ausschließlich thermisch modifizierten Holzarten tB und tK wurde in einem Labortest in Anlehnung an den Standard CEN TS 15083-1 (2004) ermittelt.

Dazu wurden fehlerfreie Prüfkörper der Dimensionen 15 x 25 x 50 mm³ einer Alterungsbeanspruchung nach EN 84 (1997) unterzogen. Anschließend wurden die Prüfkörper in mit Malzagar ausgegossene Kolleflaschen eingebaut, nachdem diese zuvor mit den Prüfpilzen *Paria placenta* (Braunfäule) und *Trametes versicolor* (Weißfäule) beimpft worden waren. Für die Einstufung der untersuchten Holzarten in die Dauerhaftigkeitsklassen sind die Ergebnisse des Prüfpilzes zu verwenden, der den stärksten Masseverlust (MV) verursacht hat. Der Median des relevanten MV wird berechnet und die Klassifizierung erfolgt anhand der Werte aus Tabelle 1.

Nach CEN TS 15083-1 (2004) ist der Versuch gültig, wenn der Masseverlust der unbehandelten Prüfkörper aus Buche (bei *Trametes versicolor)* mindestens 20% beträgt. Diese Anforderung ist erfüllt und die Untersuchung genügt den Kriterien des Standards.

Da der MV der Prüfkörper nach Angriff durch den Weißfäulepilz *Trametes versicolor* am größten war, werden die Werte aus dem Versuch mit dem genannten Prüfpilz für die Dauerhaftigkeitsklassifizierung herangezogen. Es zeigt sich eine deutliche Verbesserung der Dauerhaftigkeiten der Untersuchten Materialien, jeweils von Klasse 4 (geringe Dauerhaftigkeit) zu Klasse 1 (sehr dauerhaft), siehe Tabelle 2.

### Schnellbewitterung

Diese Untersuchung wurde im QUV-Gerät der Firma Q-lab durchgeführt. Das Gerät dient der Schnellbewitterung mittels Simulation von kurzwelligem Sonnenlicht und Beregnung. Die Untersuchung wurde in Anlehnung an EN 927-6 (2006), einem Standard für die künstliche Schnellbewitterung beschichteter Oberflächen, durchgeführt. Die Bewitterung von 4 unversiegelten Prüfkörper (18 x 74 x 150 mm³) je Material erfolgte über einen Zeitraum von 4 Wochen in jeweils einwöchigen Zyklen (Tabelle 3).

Als Beurteilungskriterien werden Vergrauung der Prüfkörper sowie Rißbildung herangezogen. Das Vergrauen, zurückzuführen auf die freigelegte Cellulose nach UV-induziertem Abbau des Lignins und anschließender Auswaschen, ist bei allen Materialien gleichermaßen ausgebildet.

Deutliche Unterschiede zeigen sich hingegen bei der Rißbildung in Folge der wiederholten Wechsel zwischen Feuchte und Trocknung:
- tB: Ausbildung von endständigen Rissen ab Zyklus 2
- tBm: Minimale Haarrisse auf der Prüfkörperoberfläche nach Zyklus 4
- tK: Zunehmende Ausbildung von endständigen und mittig verorteten Rissen auf Prüfkörperoberfläche an Zyklus 2
- tKm: keinerlei Rissbildung

Somit wurde gezeigt, dass die Stabilität des Holzes gegen die Rißbildung als Folge von Wettereinflüssen durch die Behandlung verbessert wurde.

### Abrasionsbeständigkeit

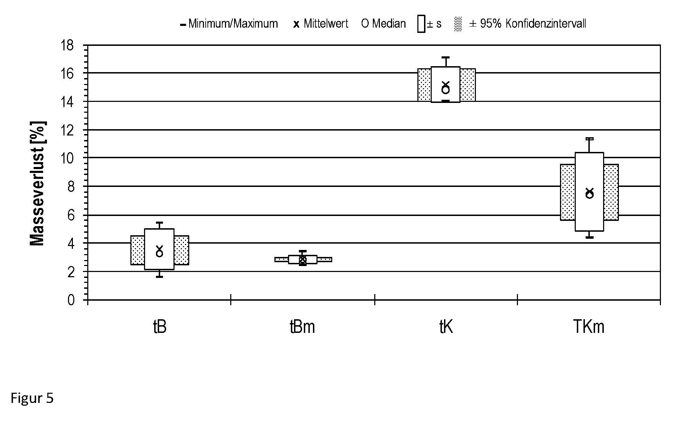

Die Widerstandsfähigkeit der relevanten Materialien gegen Abrasion wurde in Anlehnung an DIN EN 438-2 (2005) mittels Taber Abraser ermittelt. Dazu wurden die klimatisierten Prüfkörper (100x100x5 mm³) bei 70 U/min mit 1000 Umdrehungen der mit Schleifpapier (100er Korn) ausgestatteten Prüfrollen belastet. Die Abriebfestigkeit eines Materials wurde anhand der Massedifferenz der klimatisierten Prüfkörper vor und nach der Prüfung ermittelt. Je höher der Masseverlust war, desto geringer war die Abrasionsbeständigkeit des Materials. Die Ergebnisse sind in Figur 5 zusammengefasst.

Die Melaminbehandlung führt zu einem reduzierten Masseverlust und folglich einer erhöhten Abrasionsbeständigkeit der behandelten Holzarten.

**Tabelle 1: Einteilung der Dauerhaftigkeitsklassen nach CEN TS 15038 (2004)**

| Dauerhaftigkeitsklasse | Beschreibung | Masseverlust [%] |
|---|---|---|
| 1 | Sehr dauerhaft | ≤ 5 |
| 2 | Dauerhaft | >5 bis ≤ 10 |
| 3 | Mittlere Dauerhaftigkeit | >10 bis ≤ 15 |
| 4 | Wenig dauerhaft | >15 bis ≤ 30 |
| 5 | Nicht dauerhaft | > 30 |

**Tabelle 2: Dauerhaftigkeitsklassifizierung der untersuchten Materialien:**

| Material | Masseverlust [%] | Dauerhaftigkeitsklasse |
|---|---|---|
| Buche unbehandelt | 26,6 | 4 |
| tB | 23,3 | 4 |
| tBm | 1,7 | 1 |
| tK | 23,0 | 4 |
| tKm | 1,0 | 1 |

**Tabelle 3: Aufbau des Bewitterungszyklus gemäß EN 927-6 (2006)**

| Schritt | Funktion | Temperatur | Dauer |
|---|---|---|---|
| 1 | Kondensation | 45 ±3°C | 24h |
| 2 | Unterzyklus aus Schritt 3+4 | | 48 x 3+4 |
| 3 | UV | 60 ±3°C | 2,5h |
| 4 | Sprühung | | 0,5h |

## Patentansprüche

1. Schiff, mit einem Deck und einem Deckbelag, **dadurch gekennzeichnet, dass** der Deckbelag aus Holzelementen gebildet ist, die aus thermisch modifiziertem und mit einem Melamin-haltigen Harz zumindest teilweise imprägniertem Holz oder Holzwerkstoffen bestehen.

2. Schiff, mit einem Handlauf, **dadurch gekennzeichnet, dass** der Handlauf aus einem Holz oder Holzwerkstoff gebildet ist bestehend aus thermisch modifiziertem und mit einem Melamin-haltigen Harz zumindest teilweise imprägniertem Holz oder Holzwerkstoff bestehen.

3. Schiff nach Anspruch 1 oder 2, wobei das Holz oder der Holzwerkstoff erhalten wird durch Behandlung von Holz und Holzwerkstoffen, wobei das Holz oder der Holzwerkstoff einer thermischen Modifizierung unterzogen wird, **dadurch gekennzeichnet, dass** das Holz oder der Holzwerkstoff mit einem Melamin-haltigen Harz zumindest teilweise imprägniert wird und anschließend das so imprägnierte Holz oder der so imprägnierte Holzwerkstoff unter Heißdampfatmosphäre bei maximal 120°C, bevorzugt 90 - 120°C ausgehärtet wird.

4. Schiff nach Anspruch 3, wobei sich unmittelbar an dem Aushärten des Melamin-haltigen Harzes in Heißdampf die thermische Modifizierung des Holzes oder des Holzwerkstoffes anschließt, ohne eine vorherige Abkühlung des Holzes oder Holzwerkstoffes auf Temperaturen von unter 50°C.

5. Schiff nach Anspruch 3 oder 4, wobei der Schritt der thermischen Modifizierung eine Modifizierung bei Temperaturen von 150°C bis 280°C, wie 160°C bis 260°C, insbesondere bevorzugt von 180°C bis 240°C, umfasst.

6. Schiff nach Anspruch 3, wobei das Holz oder der Holzwerkstoff vor Imprägnieren mit dem Melamin-haltigen Harz und nschließendem Aushärten unter Heißdampfbedingungen bei maximal 120°C einer thermischen Modifizierung bevorzugt bei Temperaturen von 160°C bis 280°C, wie 160°C bis 260°C, insbesondere von 180°C bis 240°C unterzogen wurde.

7. Schiff nach einem der vorherigen Ansprüche, wobei das Holz oder der Holzwerkstoff vollständig mit dem Melamin-haltigen Harz imprägniert wird.

8. Schiff nach einem der vorherigen Ansprüche, **dadurch gekennzeichnet, dass** das Melamin-haltige Harz eines der Folgenden ist:
Melamin-Formaldehyd-Harz, Melamin-Harnstoff-Formaldehyd-Harz, Melamin-Harnstoff-Phenol-Formaldehyd-Harz, methanolveretherte Melamin-Formaldehyd-Harz.

9. Schiff nach zumindest einem der vorherigen Ansprüche, **dadurch gekennzeichnet, dass** die Lösung mit Melamin-haltigen Harz zum Imprägnieren des Holzes beziehungsweise des Holzwerkstoffes keine anderen Behandlungsmittel, keinen Katalysator, farbgebende und/oder brandschutzrelevante Substanzen enthält.

10. Schiff nach einem der vorherigen Ansprüche, **dadurch gekennzeichnet, dass** das Holz oder der Holzwerkstoff aus mindestens einem der folgenden Holzarten besteht: Kiefer, Weymouth-Kiefer, Erle, Birke, Ahorn, Buche, Hainbuche, Weide, Pappel, Hevea- und Bombax-Arten, Kastanie Ceiba, Ramin, Sesendock, Ilomba, Kondroti, Eukalyptus, Limba, Koto sowie das Splintholz aller europäischen Holzarten, insbesondere Limba (Terminalia superba) oder Koto (Pterygota ssp.).

11. Schiff nach einem der Ansprüche 3 bis 10, **dadurch gekennzeichnet, dass** die thermische Modifizierung mindestens den Schritt einer VakuumHochtemperaturbehandlung umfasst.

12. Schiff nach einem der Ansprüche 3 bis 11, **dadurch gekennzeichnet, dass** der Schritt der Imprägnierung eine Vakuum-Druckimprägnierung umfasst, insbesondere eine Vakuum-Druckimprägnierung mit einer Vorvakuumphase und/oder einer Hochdruckphase.

13. Schiff nach einem der Ansprüche 3 bis 11, **dadurch gekennzeichnet, dass** das Holz oder der Holzwerkstoff abschließend dem Schritt einer Feuchtkonditionierung unterworfen wird.

14. Schiff nach einem der vorherigen Ansprüche, wobei das thermisch modifizierte und mit Melamin-Harz imprägnierte und gehärtete Holz oder Holzwerkstoff eines aus Limba (Terminalia superba) oder Koto (Pterygota ssp.) ist.

15. Verwendung von thermisch modifizierten und mit Melaminharz imprägnierten und gehärteten Holz oder Holzwerkstoff bestehend aus thermisch modifiziertem und mit einem Melamin-haltigen Harz zumindest teilweise imprägniertem Holz oder Holzwerkstoff als Ersatz für Teakholz im Bootsbau.

## Claims

1. Boat, having a deck and decking, **characterized in that** the decking is formed of wooden elements which consist of thermally modified wood or wood-based materials which is/are at least partly impregnated with a melamine-containing resin.

2. Boat, having a handrail, **characterized in that** the handrail is formed of a wood or wood-based material consisting of thermally modified wood or wood-based material which is at least partly impregnated with a melamine-containing resin.

3. Boat of Claim 1 or 2, wherein the wood or the wood-based material is obtained by treatment of wood and wood-based materials, by subjecting the wood or wood-based material to a thermal modification, **characterized in that** the wood or wood-based material is at least partly impregnated with a melamine-containing resin and subsequently the wood or wood-based material thus impregnated is cured in a hot steam atmosphere at not more than 120°C, preferably 90 - 120°C.

4. Boat of Claim 3, the curing of the melamine-containing resin in hot steam being followed directly by the thermal modification of the wood or wood-based material, without prior cooling of the wood or wood-based material to temperatures of below 50°C.

5. Boat of Claim 3 or 4, the step of thermal modification comprising a modification at temperatures of 150°C to 280°C, such as 160°C to 260°C, especially preferably of 180°C to 240°C.

6. Boat of Claim 3, the wood or wood-based material, before impregnation with the melamine-containing resin and subsequent curing under hot steam conditions at not more than 120°C, having been subjected to a thermal modification preferably at temperatures of 160°C to 280°C, such as 160°C to 260°C, more particularly of 180°C to 240°C.

7. Boat of any of the preceding claims, the wood or wood-based material being impregnated completely with the melamine-containing resin.

8. Boat of any of the preceding claims, **characterized in that** the melamine-containing resin is one of the following: melamine-formaldehyde resin, melamine-urea-formaldehyde resin, melamine-urea-phenol-formaldehyde resin, methanol-etherified melamine-formaldehyde resin.

9. Boat of at least one of the preceding claims, **characterized in that** the solution with melamine-containing resin for impregnating the wood or wood-based material contains no other treatment agents, no catalyst, coloring substances and/or substances relevant to fire protection.

10. Boat of any of the preceding claims, **characterized in that** the wood or wood-based material consists of at least one of the following wood types: pine, Weymouth pine, alder, birch, maple, beech, hornbeam, willow, poplar, Hevea and Bombax species, chestnut ceiba, ramin, sesendok, ilomba, kondroti, eucalyptus, limba, coto, and also the sapwood of all European wood types, more particularly limba (Terminalia superba) or koto (Pterygota ssp.).

11. Boat of any of Claims 3 to 10, **characterized in that** the thermal modification comprises at least the step of a high-temperature vacuum treatment.

12. Boat of any of Claims 3 to 11, **characterized in that** the step of impregnation comprises a vacuum pressure impregnation, more particularly a vacuum pressure impregnation with a preliminary vacuum phase and/or a high-pressure phase.

13. Boat of any of Claims 3 to 11, **characterized in that** the wood or wood-based material is subjected lastly to the step of moisture conditioning.

14. Boat of any of the preceding claims, the thermally modified wood or wood-based material impregnated with melamine resin and cured being limba (Terminalia superba) or koto (Pterygota ssp.).

15. Use of thermally modified wood or wood-based material, impregnated with melamine resin and cured, consisting of thermally modified wood or wood-based material which is at least partly impregnated with a melamine-containing resin, as teak substitute in boatbuilding.

## Revendications

1. Bateau comportant un pont et un planchéiage de pont, **caractérisé en ce que** le planchéiage de pont est formé d'éléments en bois, qui sont constitués de bois ou de matériaux à base de bois, thermiquement modifiés, au moins partiellement imprégnés d'une résine mélaminée.

2. Bateau comportant une main courante, **caractérisé en ce que** la main courante est formée d'un bois ou d'un matériau à base de bois, consistant en un bois ou un matériau à base de bois thermiquement modifié et au moins partiellement imprégné d'une résine mélaminée.

3. Bateau selon la revendication 1 ou 2, dans lequel le bois ou le matériau à base de bois est obtenu par traitement de bois ou de matériaux à base de bois, le bois ou le matériau à base de bois étant soumis à une modification thermique, **caractérisé en ce qu'**on imprègne au moins partiellement le bois ou le matériau à base de bois d'une résine mélaminée, puis que l'on durcit le bois ainsi imprégné ou le matériau à base de bois ainsi imprégné, sous une atmosphère de vapeur chaude, à une température maximale de 120°C, de préférence de 90 à 120°C.

4. Bateau selon la revendication 3, dans lequel, immédiatement après le durcissement de la résine mélaminée dans de la vapeur chaude, on procède à la modification thermique du bois ou du matériau à base de bois, à des températures inférieures à 50°C, sans refroidissement préalable du bois ou du matériau à base de bois.

5. Bateau selon la revendication 3 ou 4, dans lequel l'étape de modification thermique comprend une modification à des températures de 150°C à 280°C, telles que 160°C à 260°C, d'une manière particulièrement préférée de 180°C à 240°C.

6. Bateau selon la revendication 3, dans lequel le bois ou le matériau à base de bois a été, avant imprégnation avec la résine mélaminée, suivie d'un durcissement dans des conditions de vapeur chaude à une température maximale de 120°C, soumis à une modification thermique, de préférence à des températures de 160°C à 280°C, telles que 160°C à 260°C, en particulier de 180°C à 240°C.

7. Bateau selon l'une des revendications précédentes, dans lequel le bois ou le matériau à base de bois est entièrement imprégné de la résine mélaminée.

8. Bateau selon l'une des revendications précédentes, **caractérisé en ce que** la résine mélaminée est l'une des suivantes : résine de mélamine-formaldéhyde, résine de mélamine-urée-formaldéhyde, résine de mélamine-urée-phénol-formaldéhyde, résine de mélamine-formaldéhyde éthérifiée par du méthanol.

9. Bateau selon au moins l'une des revendications précédentes, **caractérisé en ce que** la solution contenant une résine mélaminée pour l'imprégnation du bois ou du matériau à base de bois ne contient aucun autre agent de traitement, aucun catalyseur, aucune substance colorante et/ou à effet d'ignifugation.

10. Bateau selon l'une des revendications précédentes, **caractérisé en ce que** le bois ou le matériau à base de bois est constitué d'au moins l'une des espèces de bois suivantes : pin, pin Weymouth, aulne, bouleau, érable, hêtre, charme, saule, peuplier, espèces d'hévéa et de bombax, fromager, ramin, sesendok, ilomba, kondroti, eucalyptus, limba, koto, ainsi que le bois d'aubier de toutes les espèces de bois européennes, en particulier limba (Terminalia superba) ou koto (Pterygota ssp.).

11. Bateau selon l'une des revendications 3 à 10, **caractérisé en ce que** la modification thermique comprend au moins l'étape d'un traitement sous vide à haute température.

12. Bateau selon l'une des revendications 3 à 11, **caractérisé en ce que** l'étape d'imprégnation comprend une imprégnation sous pression sous vide, en particulier une imprégnation sous pression sous vide comprenant une phase de pré-vide et/ou une phase de haute pression.

13. Bateau selon l'une des revendications 3 à 11, **caractérisé en ce que** le bois ou le matériau à base de bois est ensuite soumis à l'étape d'un conditionnement à l'état humide.

14. Bateau selon l'une des revendications précédentes, dans lequel le bois ou le matériau à base de bois thermiquement modifié et imprégné d'une résine de mélamine, et durci, est un tel bois ou matériau de bois de limba (Terminalia superba) ou koto (Pterygota ssp.).

15. Utilisation d'un bois ou d'un matériau à base de bois thermiquement modifié et imprégné d'une résine de mélamine, et durci, constitué d'un bois ou d'un matériau à base de bois thermiquement modifié et au moins partiellement imprégné d'une résine mélaminée, en tant que succédané pour le bois de teck dans la construction de bateaux.
